# EUROPÄISCHE PATENTANMELDUNG

(11) **EP 4 190 506 A1**
(43) Veröffentlichungstag der Anmeldung: **07.06.2023**
(21) Anmeldenummer: 21211576.0
(22) Anmeldetag: 01.12.2021
(51) Int. Cl.: B25F 5/00

(54) **STEUERUNGSVERFAHREN FÜR EINEN AKKUMULATOR**

(71) Anmelder: Hilti Aktiengesellschaft, 9494 Schaan (LI)
(72) Erfinder: Frenzel, Mathias, 86944 Unterdießen (DE); Koscheck, David, 86899 Landsberg (DE); Hauser, Klaus, 86830 Schwabmünchen (DE); Mayer, Stefan, 86857 Hurlach (DE); Guggemos, Andreas, 86825 Bad Wörishofen (DE); Mößnang, Franz, 86391 Stadtbergen (DE)
(74) Vertreter: Hilti Aktiengesellschaft Corporate Intellectual Property

(57) **Zusammenfassung**

Steuerungsverfahren für einen Akkumulator (10), der eine Schnittstelle (5) zum Kommunizieren mit einer Handwerkzeugmaschine (100) und zum Versorgen der Handwerkzeugmaschine aufweist, wobei ein die Handwerkzeugmaschine charakterisierender Maschinenkennwert (MK) über die Schnittstelle des Akkumulators empfangen wird, wobei der Maschinenkennwert wenigstens eine physikalische Eigenschaft der Handwerkzeugmaschine repräsentiert, und dass der Akkumulator zur Abgabe von elektrischer Energie an Handwerkzeugmaschine aktiviert wird, falls eine Logikschaltung (1) des Akkumulators ermittelt, dass ein Systemkennwert (SK), der auf dem Maschinenkennwert und auf einem eine physikalische Eigenschaft des Akkumulators repräsentierenden Akkukennwert (AK) basiert, eine vorgegebene Sicherheitsschwelle (SW) überschreitet oder unterschreitet.

## Beschreibung

Die vorliegende Erfindung betrifft ein Steuerungsverfahren für einen Akkumulator, der eine Schnittstelle zum Kommunizieren mit einer Handwerkzeugmaschine und zum Versorgen der Handwerkzeugmaschine mit elektrischer Energie aufweist, wobei ein die Handwerkzeugmaschine charakterisierender Kennwert über die Schnittstelle des Akkumulators empfangen wird.

Ein solches Steuerungsverfahren ist beispielsweise aus der EP 2 207 249 B1 bekannt. Es ist Aufgabe der vorliegenden Erfindung ein Steuerungsverfahren für einen Akkumulator bereitzustellen, dass die Grundlage für eine erhöhte Absicherung gegen mögliche Beschädigungen in Folge eines Sturzes des Akkumulators schafft.

Die Aufgabe wird dadurch gelöst, dass der Maschinenkennwert wenigstens eine physikalische Eigenschaft der Handwerkzeugmaschine repräsentiert, und dass der Akkumulator zur Abgabe von elektrischer Energie an die Handwerkzeugmaschine aktiviert wird und/oder die Handwerkzeugmaschine von einen ersten vorbestimmten Betriebszustand in einen zweiten vorbestimmten Betriebszustand eingestellt wird, wobei in dem ersten vorbestimmten Betriebszustand die Handwerkzeugmaschine keine elektrische Energie aus dem Akkumulator und in dem zweiten vorbestimmten Betriebszustand elektrische Energie mit wenigstens einem vorbestimmten Entladeparameter aus dem Akkumulator entnehmen kann, falls eine Logikschaltung des Akkumulators ermittelt, dass ein Systemkennwert, der auf dem Maschinenkennwert und auf einem eine physikalische Eigenschaft des Akkumulators repräsentierenden Akkukennwert basiert, eine vorgegebene Sicherheitsschwelle überschreitet oder unterschreitet.

Die Erfindung schließt die Erkenntnis ein, dass ein Akkumulator für eine elektrische Handwerkzeugmaschine (z.B. einen Bohrhammer) eine sicherheitskritische Komponente ist, die - vorteilhafterweise in Abhängigkeit davon, ob eine Systemkennwert eine vorgegebene Sicherheitsschwelle überschreitet oder unterschreitet - zur Abgabe von elektrischer Energie aktiviert wird bzw. der Handwerkzeugmaschine überhaupt ermöglicht elektrische Energie aus dem Akkumulator zu entnehmen. Ein Anwendungsfall ist beispielsweise die Bewahrung des Akkumulators vor einer möglichen Beschädigung in Folge eines Sturzes. Mit anderen Worten: es kann insbesondere vorgesehen sein, dass der Akkumulator erst und/oder nur aktiviert wird, wenn er an einer geeigneten Handwerkzeugmaschine verwendet wird, z.B. einer Handwerkzeugmaschine, die eine bestimmte Masse nicht überschreitet. Ein ungeeigneter Akkumulator käme nicht zum Einsatz und würde konsequenterweise vor einer möglichen Beschädigung bzw. Defekt in Folge eines Sturzes bewahrt werden.

Das Einstellen der Handwerkzeugmaschine von dem ersten in den zweiten vorbestimmten Betriebszustand, wobei in dem ersten Betriebszustand keine Energie aus dem Akkumulator und in dem zweiten Betriebszustand Energie aus dem Akkumulator entnommen werden kann, erfolgt nach Aussenden eines entsprechenden Signals von dem Akkumulator an die Handwerkzeugmaschine.

Der Begriff "Entladeparameter" bezieht sich in diesem Zusammenhang auf einen Kennwert bzw. Charakteristik eines Entladevorgangs und beinhaltet unter anderem einen Stromstärkewert (d.h. Entladestrom), einen Spannungswert (d.h. Entladespannung), einen Temperaturwert (d.h. maximale und/oder minimale Temperaturgrenzwerte zur Durchführung eines Entladevorgangs), einen Widerstandswert (d.h. maximale Widerstandsgrenzwerte zur Durchführung eines Entladevorgangs) oder dergleichen.

Es hat sich als vorteilhaft herausgestellt, wenn die Sicherheitsschwelle eine vorgegebene maximale Sturzenergie des Akkumulators ist. In einer weiteren besonders bevorzugten Ausgestaltung ist der Systemkennwert eine ermittelte Sturzenergie eines Systems aus Handwerkzeugmaschine und Akkumulator.

Es hat sich als vorteilhaft herausgestellt, wenn der Akkumulator zur Abgabe von elektrischer Energie an Handwerkzeugmaschine aktiviert wird und/oder die Handwerkzeugmaschine von einen ersten vorbestimmten Betriebszustand in einen zweiten vorbestimmten Betriebszustand eingestellt wird, wobei in dem ersten vorbestimmten Betriebszustand die Handwerkzeugmaschine keine elektrische Energie aus dem Akkumulator und in dem zweiten vorbestimmten Betriebszustand elektrische Energie mit wenigstens einem vorbestimmten Ladeparameter aus dem Akkumulator entnehmen kann,, falls der Systemkennwert die vorgegebene Sicherheitsschwelle unterschreitet.

In einer weiteren besonders bevorzugten Ausgestaltung umfasst der Maschinenkennwert eine Masse der Handwerkzeugmaschine. Es hat sich als vorteilhaft herausgestellt, wenn der Maschinenkennwert eine vorgegebene Fallhöhe der Handwerkzeugmaschine umfasst. Der Maschinenkennwert kann eine Tabelle aufweisen (oder durch eine solche repräsentiert sein), wobei die Tabelle nach Art eines Telegramms von der Handwerkzeugmaschine an die Schnittstelle des Akkumulators versendet werden kann.

Die Tabelle kann ein oder mehrere Tabellenspalten aufweisen, wobei jede Tabellenspalte vorzugsweise durch ein Byte definiert ist.

In einer besonders bevorzugten Ausgestaltung umfasst der Akkukennwert eine Masse des Akkumulators. Der Akkukennwert kann eine Tabelle aufweisen (oder durch eine solche repräsentiert sein). Die Tabelle kann ein oder mehrere Tabellenspalten aufweisen, wobei jede Tabellenspalte vorzugsweise durch ein Byte definiert ist.

Es hat sich als vorteilhaft herausgestellt, wenn der Systemkennwert berechnet wird aus der Summe der Masse des Akkumulators und der Masse der Handwerkzeugmaschine, multipliziert mit der vorgegebenen Fallhöhe der Handwerkzeugmaschine und der Fallbeschleunigung.

Es hat sich als vorteilhaft herausgestellt, wenn das Steuerungsverfahren einen Matching-Algorithmus zwischen Akkumulator und Handwerkzeugmaschine enthält.

Es hat sich als vorteilhaft herausgestellt, dass bei der Ausführung des Steuerungsverfahrens und/oder im Rahmen des Matching-Algorithmus eine Spannungsklasse des Akkumulators über die Schnittstelle an die Handwerkzeugmaschine versendet wird. Die Spannungsklasse des Akkumulators kann beispielsweise 12 Volt, 22 Volt oder 36 Volt betragen.

In einer weiteren besonders bevorzugten Ausgestaltung prüft die Logikschaltung wenigstens eine weitere technische Bedingung als Voraussetzung dafür, dass der Akkumulator zur Abgabe von elektrischer Energie an die Handwerkzeugmaschine aktiviert wird und/oder die Handwerkzeugmaschine von dem ersten vorbestimmten Betriebszustand in den zweiten vorbestimmten Betriebszustand eingestellt wird, wobei in dem ersten vorbestimmten Betriebszustand die Handwerkzeugmaschine keine elektrische Energie aus dem Akkumulator und in dem zweiten vorbestimmten Betriebszustand elektrische Energie mit wenigstens einem vorbestimmten Entladeparameter aus dem Akkumulator entnehmen kann.

Eine solche technische Bedingung kann beispielweise die richtige, d.h. zu der Handwerkzeugmaschine passende, Spannungsklasse des Akkumulators sein. Alternativ oder zusätzlich kann eine solche technische Bedingung beispielweise eine durch den Akkumulator erfahrene Sturzanzahl, bedarfsweise gewichtet durch eine Schwere eines jeweiligen Sturzes, sein.

Es ist dabei weiterhin möglich, dass die Logikschaltung während eines Entladevorgangs fortlaufend in regelmäßigen oder unregelmäßigen Zeitabständen wenigstens eine weitere technische Bedingung als Voraussetzung dafür prüft, dass der Akkumulator zur Abgabe von elektrischer Energie an die Handwerkzeugmaschine aktiviert wird und/oder die Handwerkzeugmaschine von dem ersten vorbestimmten Betriebszustand in den zweiten vorbestimmten Betriebszustand eingestellt wird, wobei in dem ersten vorbestimmten Betriebszustand die Handwerkzeugmaschine keine elektrische Energie aus dem Akkumulator und in dem zweiten vorbestimmten Betriebszustand elektrische Energie mit wenigstens einem vorbestimmten Entladeparameter aus dem Akkumulator entnehmen kann. Wenn als Ergebnis der Überprüfung der wenigstens einen weiteren technischen Bedingung durch die Logikschaltung keine ausreichende Übereinstimmung vorliegt, wird der Akkumulator nicht zur Abgabe von elektrischer Energie an die Handwerkzeugmaschine aktiviert oder deaktiviert. Darüber hinaus verbleibt die Handwerkzeugmaschine in dem ersten vorbestimmten Betriebszustand oder wird von dem zweiten zurück in den ersten Betriebszustand eingestellt.

Die Aufgabe wird ebenfalls gelöst durch einen Akkumulator für eine elektrische Handwerkzeugmaschine, wobei der Akkumulator eine Schnittstelle zum Kommunizieren mit der Handwerkzeugmaschine und zum Versorgen der Handwerkzeugmaschine mit elektrischer Energie aufweist. Die Schnittstelle ist ausgebildet, ein die Handwerkzeugmaschine charakterisierenden Maschinenkennwert, der wenigstens eine physikalische Eigenschaft der elektrischen Handwerkzeugmaschine repräsentiert zu empfangen. Der Akkumulator ist ausgebildet zur Abgabe von elektrischer Energie an die Handwerkzeugmaschine aktiviert zu werden und/oder zum Aussenden wenigstens eines Signals an die Handwerkzeugmaschine zum Einstellen der Handwerkzeugmaschine von einem ersten vorbestimmten Betriebszustand in einen zweiten vorbestimmten Betriebszustand, wobei in dem ersten vorbestimmten Betriebszustand die Handwerkzeugmaschine keine elektrische Energie aus dem Akkumulator und in dem zweiten vorbestimmten Betriebszustand elektrische Energie mit wenigstens einem vorbestimmten Entladeparameter aus dem Akkumulator entnehmen kann, falls eine Logikschaltung des Akkumulators ermittelt, dass ein Systemkennwert, der auf dem Maschinenkennwert und auf einem eine physikalische Eigenschaft des Akkumulators repräsentierenden Akkukennwert basiert, eine vorgegebene Sicherheitsschwelle überschreitet oder unterschreitet.

Der Akkumulator kann durch die mit Bezug auf das Steuerungsverfahren beschriebenen Merkmale in entsprechender Weise weitergebildet sein.

Weitere Vorteile ergeben sich aus der folgenden Figurenbeschreibung. In der Figur ist ein besonders bevorzugtes Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert. Es zeigt:

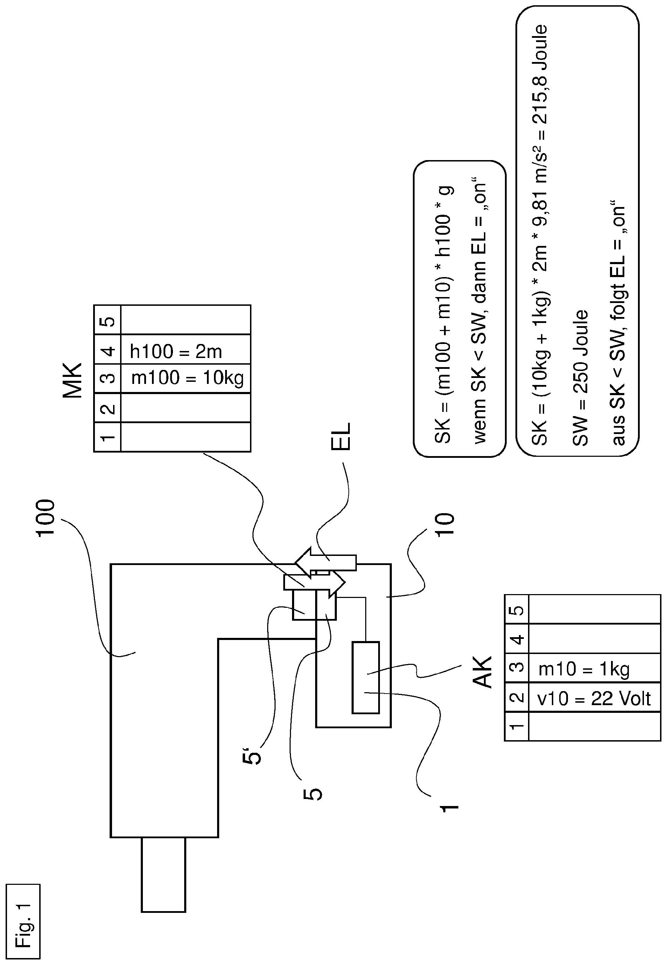

- Figur 1: ein bevorzugtes Ausführungsbeispiel eines Akkumulators angeordnet an einer Handwerkzeugmaschine.

### Ausführunasbeispiel:

Fig. 1 zeigt - in stark schematisierter Darstellung - einen Akkumulator 10 für eine elektrische Handwerkzeugmaschine 100.

Das erfindungsgemäße Steuerungsverfahren ist vorzugsweise für den in Figur 1 gezeigten Akkumulator 10 verwirklicht.

Der Akkumulator 10 weist beispielhaft eine Versorgungsspannung von 22 Volt auf. Der Akkumulator 10 ist ausgestattet mit einer Schnittstelle 5 zum Kommunizieren mit der Handwerkzeugmaschine 100 und zum elektrischen Versorgen der Handwerkzeugmaschine 100 mit elektrischer Energie.

Die Handwerkzeugmaschine 100 verfügt über eine korrespondierende Schnittstelle 5', über welche die Handwerkzeugmaschine 100 ihrerseits vom Akkumulator 10 mit elektrischer Energie versorgt wird und über welche die die Handwerkzeugmaschine 100 in eine kommunikative Verbindung mit dem Akkumulator 10 treten kann.

Die Schnittstelle 5 des Akkumulators 10 ist ausgebildet, ein die Handwerkzeugmaschine 100 charakterisierenden Maschinenkennwert MK von der Handwerkzeugmaschine 100 zu empfangen. Der Maschinenkennwert MK ist beispielhaft als eine Tabelle (auch als Look-Up Tabelle bezeichnet) dargestellt, die von der korrespondierende Schnittstelle 5' der Handwerkzeugmaschine 100 nach Art eines Telegramms an die Schnittstelle 5 des Akkumulators 10 versendet wird. Dies kann vorteilhafterweise jedes Mal erfolgen, wenn der Akkumulators 10 (oder ein anderer Akkumulator) mit der Handwerkzeugmaschine 100 verbunden wird.

Der Maschinenkennwert MK repräsentiert vorliegend zwei physikalische Eigenschaften der Handwerkzeugmaschine 100, nämlich eine Masse m100 (hier in Tabellenspalte 3) der Handwerkzeugmaschine 100 und eine vorgegebene Fallhöhe h100 (hier in Tabellenspalte 4) der Handwerkzeugmaschine 100. Beispielhaft beträgt die Masse m100 10 Kilogramm. Die vorgegebene Fallhöhe h100, also insbesondere diejenige maximale Höhe, aus derer ein unbeabsichtigter Absturz der Handwerkzeugmaschine 100 im Betrieb zu erwarten ist. Die vorgegeben Fallhöhe h100 beträgt hier 2 Meter. Der Akkukennwert AK umfasst eine Masse m10 (hier in Tabellenspalte 3) des Akkumulators 10, welche beispielhaft 1 Kilogramm beträgt.

Es hat sich als vorteilhaft herausgestellt, wenn die Masse m100 der Handwerkzeugmaschine 100 im Maschinenkennwert MK als Vielfaches von 200 Gramm (1/5 kg) hinterlegt ist. Ebenfalls vorteilhaft ist die Masse m10 (hier in Tabellenspalte 2) des Akkumulators 10 im Akkukennwert als Vielfaches von 200 Gramm (1/5 kg) hinterlegt. Es hat sich weiterhin als vorteilhaft herausgestellt, wenn die vorgegeben Fallhöhe h100 im Maschinenkennwert MK als Vielfaches von 10 Zentimeter (1/10 m) hinterlegt ist. Dies ermöglicht eine vereinfachte Berechnung.

Wie der Fig. 1 entnommen werden kann, ist der Akkumulator 10 ausgestattet mit einer Logikschaltung 1, die bewirken kann, dass der Akkumulator 10 zur Abgabe von elektrischer Energie EL an die Handwerkzeugmaschine 100 aktiviert wird. Dies erfolgt, falls die Logikschaltung 1 des Akkumulators 10 ermittelt, dass ein Systemkennwert SK, der auf dem Maschinenkennwert MK und einem eine physikalische Eigenschaft des Akkumulators 10 repräsentierenden Akkukennwert AK basiert, eine vorgegebene Sicherheitsschwelle SW unterschreitet. Die Aktivierung des Akkumulators 10 zur Abgabe von elektrischer Energie EL wird in Figur 1 durch den Status EL = "on" dargestellt. Die Sicherheitsschwelle SW ist eine vorgegebene maximale Sturzenergie des Akkumulators 10 und beträgt im vorliegenden Beispiel 250 Joule. Der Systemkennwert SK ist eine ermittelte Sturzenergie eines Systems aus Handwerkzeugmaschine 100 und Akkumulator 10. Dabei berechnet sich der Systemkennwert SK aus der Summe der Masse m10 des Akkumulators 10 und der Masse m100 der Handwerkzeugmaschine 100 multipliziert mit der vorgegebene Fallhöhe h100 der Handwerkzeugmaschine 100 und der Fallbeschleunigung g, d.h. SK = (10kg + 1kg) * 2m * 9,81 m/s² = 215,8 Joule.

Da der Systemkennwert SK mit 215,8 Joule geringer ist als die Sicherheitsschwelle SW, erfolgt eine Aktivierung des Akkumulators 10 zur Abgabe von elektrischer Energie, d.h. EL = "on". Falls der Systemkennwert SK größer als die Sicherheitsschwelle SW wäre, würde der Akkumulators 10 inaktiv verbleiben.

Das Steuerungsverfahren, das für den in Fig. 1 gezeigten Akkumulator 10 verwirklicht ist, kann Teil eines Matching-Algorithmus zwischen Akkumulator 10 und Handwerkzeugmaschine 100 sein. Durch den Matching-Algorithmus kann - vereinfacht gesagt - festgestellt werden, ob der Akkumulator 10 (oder ein anderer Akkumulator, der zumindest mechanisch an die korrespondierende Schnittstellte 5' der Handwerkzeugmaschine 100 angeschlossen werden kann) auch tatsächlich zu der Handwerkzeugmaschine 100 passt.

Die im Rahmen dieser Erfindung vorgestellte Überprüfung des Systemkennwerts SK gegen die Sicherheitsschwelle SW ist demnach nicht notwendigerweise das einzige technische Kriterium. So kann beispielsweise vorgesehen sein, dass die Logikschaltung 1 wenigstens eine weitere technische Bedingung als Voraussetzung dafür prüft, dass der Akkumulator 10 zur Abgabe von elektrischer Energie EL an die Handwerkzeugmaschine 100 aktiviert wird. Eine solche weitere technische Bedingung kann beispielsweise eine Spannungsklasse v10 des Akkumulators 10 sein, die über die Schnittstelle 5 an die Handwerkzeugmaschine 100 versendet wird. Der Akkukennwert AK kann beispielsweise im Sinne eines Telegramms um die Spannungsklasse v10 des Akkumulators 10 erweitert sein. Bei sequenzieller Auswertung des Akkukennwerts AK in Fig. 1 würde zunächst die in der Tabellenspalte 2 befindliche Spannungsklasse v10, danach die in Tabellenspalte 3 befindliche Masse m10 des Akkumulators 10 abgearbeitet werden.

### Bezuaszeichenliste

- 1: Logikschaltung
- 5: Schnittstelle
- 5': korrespondierende Schnittstelle
- 10: Akkumulator
- 100: Elektrische Handwerkzeugmaschine
- m10: Masse des Akkumulators
- v10: Spannungsklasse
- m100: Masse der Handwerkzeugmaschine
- h100: vorgegebene Fallhöhe
- AK: Akkukennwert
- EL: Elektrische Energie
- MK: Maschinenkennwert
- SK: Systemkennwert
- SW: Sicherheitsschwelle

## Patentansprüche

1. Steuerungsverfahren für einen Akkumulator (10), der eine Schnittstelle (5) zum Kommunizieren mit einer Handwerkzeugmaschine (100) und zum Versorgen der Handwerkzeugmaschine (100) mit elektrischer Energie aufweist, wobei ein die Handwerkzeugmaschine (100) charakterisierender Maschinenkennwert (MK) über die Schnittstelle (5) des Akkumulators (10) empfangen wird,
**dadurch gekennzeichnet, dass** der Maschinenkennwert (MK) wenigstens eine physikalische Eigenschaft der Handwerkzeugmaschine (100) repräsentiert, und dass der Akkumulator (10) zur Abgabe von elektrischer Energie (EL) an die Handwerkzeugmaschine (100) aktiviert wird und/oder die Handwerkzeugmaschine (100) von einen ersten vorbestimmten Betriebszustand in einen zweiten vorbestimmten Betriebszustand eingestellt wird, wobei in dem ersten vorbestimmten Betriebszustand die Handwerkzeugmaschine (100) keine elektrische Energie aus dem Akkumulator (10) und in dem zweiten vorbestimmten Betriebszustand elektrische Energie mit wenigstens einem vorbestimmten Entladeparameter aus dem Akkumulator (10) entnehmen kann, falls eine Logikschaltung (1) des Akkumulators (10) ermittelt, dass ein Systemkennwert (SK), der auf dem Maschinenkennwert (MK) und auf einer eine physikalische Eigenschaft des Akkumulators (10) repräsentierenden Akkukennwert (AK) basiert, eine vorgegebene Sicherheitsschwelle (SW) überschreitet oder unterschreitet.

2. Steuerungsverfahren nach Anspruch 1,
**dadurch gekennzeichnet, dass** die Sicherheitsschwelle (SW) eine vorgegebene maximale Sturzenergie des Akkumulators (10) ist und/oder der Systemkennwert (SK) eine ermittelte Sturzenergie eines Systems aus Handwerkzeugmaschine (100) und Akkumulator ist (10).

3. Steuerungsverfahren nach Anspruch 1 oder 2,
**dadurch gekennzeichnet, dass** der Maschinenkennwert (MK) eine Masse (m100) der Handwerkzeugmaschine (100) und eine vorgegebene Fallhöhe (h100) der Handwerkzeugmaschine (100) umfasst.

4. Steuerungsverfahren nach Anspruch 3,
**dadurch gekennzeichnet, dass** der Akkukennwert (AK) eine Masse (m10) des Akkumulators (10) umfasst.

5. Steuerungsverfahren nach Anspruch 4,
**dadurch gekennzeichnet, dass** der Systemkennwert (SK) berechnet wird aus der Summe der Masse (m10) des Akkumulators (10) und der Masse (m100) der Handwerkzeugmaschine (100), multipliziert mit der vorgegebene Fallhöhe (h100) der Handwerkzeugmaschine (100) und der Fallbeschleunigung (g).

6. Steuerungsverfahren nach einem der vorangehenden Ansprüche,
**dadurch gekennzeichnet, dass** das Steuerungsverfahren einen Matching-Algorithmus zwischen Akkumulator (10) und Handwerkzeugmaschine (100) enthält.

7. Steuerungsverfahren nach Anspruch 6,
**dadurch gekennzeichnet, dass** bei der Ausführung des Steuerungsverfahrens und/oder im Rahmen des Matching-Algorithmus eine Spannungsklasse des Akkumulators (10) über die Schnittstelle (5) an die Handwerkzeugmaschine (100) versendet wird.

8. Steuerungsverfahren nach einem der vorangehenden Ansprüche,
**dadurch gekennzeichnet, dass** die Logikschaltung (1) wenigstens eine weitere technische Bedingung als Voraussetzung dafür prüft, dass der Akkumulator (10) zur Abgabe von elektrischer Energie (EL) an die Handwerkzeugmaschine (100) aktiviert wird und/oder die Handwerkzeugmaschine (100) von dem ersten vorbestimmten Betriebszustand in den zweiten vorbestimmten Betriebszustand eingestellt wird, wobei in dem ersten vorbestimmten Betriebszustand die Handwerkzeugmaschine (100) keine elektrische Energie aus dem Akkumulator (10) und in dem zweiten vorbestimmten Betriebszustand elektrische Energie mit wenigstens einem vorbestimmten Entladeparameter aus dem Akkumulator (10) entnehmen kann.

9. Akkumulator (10) für eine elektrische Handwerkzeugmaschine (100), wobei der Akkumulator (10) eine Schnittstelle (5) zum Kommunizieren mit der Handwerkzeugmaschine (100) und zum Versorgen der Handwerkzeugmaschine (100) mit elektrischer Energie aufweist, wobei die Schnittstelle (5) ausgebildet ist, ein die Handwerkzeugmaschine (100) charakterisierenden Maschinenkennwert (MK) zu empfangen,
**dadurch gekennzeichnet, dass** der Maschinenkennwert (MK) wenigstens eine physikalische Eigenschaft der Handwerkzeugmaschine (100) repräsentiert, und dass der Akkumulator (10) ausgebildet ist zur Abgabe von elektrischer Energie (EL) an die Handwerkzeugmaschine (100) aktiviert zu werden und/oder zum Aussenden wenigstens eines Signals an die Handwerkzeugmaschine (100) zum Einstellen der Handwerkzeugmaschine (100) von einem ersten vorbestimmten Betriebszustand in einen zweiten vorbestimmten Betriebszustand, wobei in dem ersten vorbestimmten Betriebszustand die Handwerkzeugmaschine (100) keine elektrische Energie aus dem Akkumulator (10) und in dem zweiten vorbestimmten Betriebszustand elektrische Energie mit wenigstens einem vorbestimmten Entladeparameter aus dem Akkumulator (10) entnehmen kann, falls eine Logikschaltung (1) des Akkumulators (100) ermittelt, dass ein Systemkennwert (SK), der auf dem Maschinenkennwert (MK) und einem eine physikalische Eigenschaft des Akkumulators (10) repräsentierenden Akkukennwert (AK) basiert, eine vorgegebene Sicherheitsschwelle (SW) überschreitet oder unterschreitet.

10. System aus einem Akkumulator (10) nach Anspruch 9 und einer elektrischen Handwerkzeugmaschine (100), wobei die Handwerkzeugmaschine (100) eine korrespondierende Schnittstelle (5') aufweist, über welche der die Handwerkzeugmaschine (100) charakterisierenden Maschinenkennwert (MK) an die Schnittstelle (5) des Akkumulators (10) gesendet werden kann.
